# EUROPÄISCHE PATENTSCHRIFT

(11) **EP 1 955 588 B1**
(45) Veröffentlichungstag und Bekanntmachung des Hinweises auf die Patenterteilung: **28.03.2012**
(21) Anmeldenummer: 07023711.0
(22) Anmeldetag: 07.12.2007
(51) Int. Cl.: A01G 27/04

(54) **Bewässerungseinrichtung**
Irrigation device
Dispositif d'arrosage

(30) Priorität: 12.02.2007 DE 102007006766
(43) Veröffentlichungstag der Anmeldung: 13.08.2008
(73) Patentinhaber: Zinco GmbH, 72669 Unterensingen (DE)
(72) Erfinder: Walker, Ralf, 72622 Nürtingen (DE)
(74) Vertreter: Vogler, Bernd

(56) Entgegenhaltungen:
- WO-A-02/19797
- CH-A5- 686 060
- DE-A1- 10 003 837
- GB-A- 2 018 117
- US-A- 4 428 151

## Beschreibung

Die Erfindung betrifft eine Bewässerungseinrichtung zur kapillaren Bewässerung von Vegetationssubstrat, mit einem flächenförmigen, an das Vegetationssubstrat Wasser abgebenden Substratträger, der über eine kapillare Bewässerungsstruktur mit Wasser versorgbar ist.

Eine Bewässerungseinrichtung der eingangs erwähnten Art ist aus der DE 200 13 218 U1 bekannt. Dort wird auf Tischen bzw. Wannen ein saugfähiges Vlies ausgebreitet. Dieses wird durch Dochte oder Vliesstreifen aus einem darunterliegenden Wasserreservoir befeuchtet. Die Dochte werden an mehreren Punkten in gleichmäßigem Abstand nach oben geführt und unter dem Vlies jeweils strahlenförmig ausgebreitet, sodass eine möglichst gleichmäßige Befeuchtung des Vlieses erfolgt. Die Dochte müssen hier jedoch vor der Verlegung des Vlieses separat ausgelegt werden. Ferner besteht die Notwendigkeit, dass unter dem Vlies eine möglichst flächige Auflage vorhanden sein muss, um die unterseits des Vlieses ausgebreiteten Dochte gut gegen das Vlies zu drücken, damit das durch die Dochte kapillar beförderte Wasser zuverlässig an das Vlies weitergegeben wird.

Eine Bewässerungseinrichtung der eigangs gennanten Art ist aus US-A-4428151 bekannt geworden.

Aus der DE 196 10 241 C2 ist eine Bewässerungseinrichtung bekannt, die zur Langzeitbefeuchtung des Wurzelballens von Topfpflanzen dient. Es ist ein Topf mit Vegetationssubstrat vorgesehen, wobei am Topfboden ein plattenförmiger Körper aus porösem, hygroskopischem Material angeordnet ist. In den Körper ist ein flexibler Docht eingearbeitet, der über ein Topfbodenloch in einen unterhalb des Topfes angeordneten Wasserspeicher ragt. Der Docht zieht hierbei mittels Kapillarwirkung Wasser an und gibt dieses an den hygroskopischen Körper ab, der wiederum das Vegetationssubstrat mit Wasser versorgt. Die Herstellung des porösen, hygroskopischen Körpers und die Einarbeitung des Dochtes sind relativ aufwändig. Ferner lässt sich eine solche Bewässerungseinrichtung für flächige Begrünungen nur bedingt nutzen, da in diesem Fall eine Vielzahl der Körper benötigt werden und diese einzeln ausgelegt werden müssen.

Aufgabe der Erfindung ist es, eine Bewässerungseinrichtung der eingangs genannten Art zu schaffen, die kostengünstig herstellbar, einfach und schnell einsetzbar und für unterschiedliche Anwendungsgebiete geeignet ist.

Diese Aufgabe wird durch eine Bewässerungseinrichtung mit den Merkmalen des unabhängigen Anspruchs 1 gelöst. Weiterbildungen der Erfindung sind in den Unteransprüchen dargestellt.

Die erfindungsgemäße Bewässerungsseinrichtung zeichnet sich dadurch aus, dass Substratträger und Bewässerungsstruktur als Baueinheit zu einer einheitlich handhabbaren Bewässerungsmatte zusammengefasst sind.

Die Bewässerungsmatte vereint also Substratträger und Bewässerungsstruktur, wobei eine einfache, schnelle und kostengünstige Verlegung möglich ist. Die aufwändige Vorverlegung von separaten Dochten bzw. die aufwändige Herstellung eines porösen, hygroskopischen, nicht für flächenförmige Begrünungen nutzbaren Körpers sowie die damit verbundene aufwändige Dochtanbringung ist nicht notwendig. Die erfindungsgemäße Bewässerungsmatte lässt sich in einem einzigen Arbeitsgang verlegen. Sie zeichnet sich ferner durch ein relativ geringes Gewicht aus, und ist daher für Dachbegrünungen besonders geeignet, bei denen das Gewicht auf Grund der maximal zulässigen Dachlast eine bedeutende Rolle spielt. Die Bewässerungsmatte kann in horizontaler oder schräger Lage verlegt werden. Ferner ist es möglich, das über der Bewässerungsmatte liegende Substrat mittels Gartenwerkzeugen wie Harken, Rechen oder dergleichen problemlos zu bearbeiten.

In besonders bevorzugter Weise ist die Bewässerungsmatte bahnartig ausgestaltet. Es ist möglich, mehrere solcher bahnartigen Bewässerungsmatten nebeneinander auszulegen, sodass in kurzer Zeit die Verlegung auf großer Fläche möglich ist. Es ist möglich, jeweils benachbarte Bewässerungsmatten an ihren Längsrändern überlappend auszulegen. Hierzu können die Bewässerungsmatten jeweils an den Längsrändern frei von der Bewässerungsstruktur sein.

Besonders bevorzugt ist die Bewässerungsmatte flexibel, insbesondere auf- und abrollbar ausgebildet. Dadurch lässt sich die Bewässerungsmatte beispielsweise zum Transport auf eine kompakte Größe bringen. Am Einsatzort ist dann eine Verlegung durch Ausrollen der Bewässerungsmatte nach Art eines Teppichs möglich. Alternativ ist es aber auch möglich, dass die Bewässerungsmatte steif ausgebildet ist.

Bei einer Weiterbildung der Erfindung besteht die Bewässerungsmatte aus witterungsbeständigem Material. Dadurch ist die Langlebigkeit der Bewässerungsmatte gewährleistet.

Es ist möglich, dass die Bewässerungsmatte aus Material mit Filterfunktion für darüberliegendes Vegetationssubstrat aufgebaut ist. Dadurch kann eine Trennung zwischen dem Vegetationssubstrat und einem unter der Bewässerungsmatte angeordneten Wasserspeicher erreicht werden. Es wird verhindert, dass Vegetationssubstrat in den Wasserspeicher gelangt.

Es ist möglich, dass die Bewässerungsmatte zumindest teilweise aus recyclingfähigem Material besteht.

In besonders bevorzugter Weise bestehen Substratträger und Bewässerungsstruktur der Bewässerungsmatte aus demselben Material. Prinzipiell wäre es jedoch auch denkbar, dass obgleich Substratträger und Bewässerungsstruktur als Baueinheit zusammengefasst sind, Substratträger und Bewässerungsstruktur aus unterschiedlichen Materialien bestehen.

Der Substratträger kann zumindest teilweise aus kapillarwirksamem Material bestehen. Dadurch ist auch ein kapillarer Weitertransport von Wasser innerhalb des Substratträgers möglich.

Bei einer Weiterbildung der Erfindung wird der Substratträger von einem Vlies und/oder einer Folie und/oder einem Gewebe und/oder einer Maschenware und/oder einem Gitter gebildet. In bevorzugter Weise wird für den Substratträger textiles Material verwendet. Als textile Maschenware eignet sich beispielsweise ein Gewirk oder ein Gestrick. Es sind jedoch auch nichttextile Materialien einsetzbar, die Wasser an das Vegetationssubstrat abgeben können.

Besonders bevorzugt ist die Bewässerungsstruktur Bestandteil des Substratträgers. Die Bewässerungsstruktur kann also beispielsweise aus dem Material des Substratträgers herausgebildet sein.

In besonders bevorzugter Weise wird die Bewässerungsstruktur von einer Vielzahl von über die Fläche des Substratträgers angeordneten, von diesem abstehenden, flexiblen Kapillarelementen gebildet. Bevorzugterweise werden die Kapillarelemente von Fäden gebildet. Es sind jedoch auch Dochte einsetzbar.

Bei einer Weiterbildung der Erfindung sind mehrere Bewässerungsmatten mittels Verbindungsmitteln miteinander verbindbar oder verbunden. Als Verbindungsmittel können textile Haftverschlüsse eingesetzt werden. Es sind jedoch auch Klebemittel, beispielsweise Klebeband oder dergleichen, einsetzbar.

Die Bewässerungseinrichtung kann eine unterhalb der Bewässerungsmatte angeordnete oder anzuordnende Abstandshaltevorrichtung zur Abstandshaltung des Substratträgers von der Wasseroberfläche eines der Bewässerungsstruktur zugeordneten Wasserreservoirs aufweisen. Dadurch wird verhindert, dass der Substratträger übernässt wird und dadurch gegebenenfalls das Vegetationssubstrat übermäßig mit Wasser versorgt.

Die Abstandshaltevorrichtung kann eine Vielzahl von rasterartig angeordneten Abstandselementen aufweisen. Die Abstandselemente können miteinander zusammenhängend ausgebildet sein, wobei benachbarte Abstandshalteelemente durch als Wasserreservoir dienende Muldenabschnitte verbunden sein können. Die Abstandshaltevorrichtung kann alternativ auch aus separaten unzusammenhängenden Abstandselementen aufgebaut sein.

Bevorzugte Ausführungsbeispiele der Erfindung sind in der Zeichnung dargestellt und werden im Folgenden näher erläutert. In der Zeichnung zeigen:
- Figur 1: eine Seitenansicht einer im Gebrauchszustand befindlichen Bewässerungsmatte der erfindungsgemäßen Bewässerungseinrichtung,
- Figur 2: eine Seitenansicht auf die Bewässerungsmatte von Figur 1 im teilweise aufgerollten Zustand,
- Figur 3: ein Schnitt durch eine Begrünung, wobei ein erste Ausführungsform der erfindungsgemäßen Bewässerungseinrichtung gezeigt ist und
- Figur 4: ein Schnitt durch eine Begrünung, wobei ein zweites Ausführungsbeispiel der erfindungsgemäßen Bewässerungseinrichtung gezeigt ist.

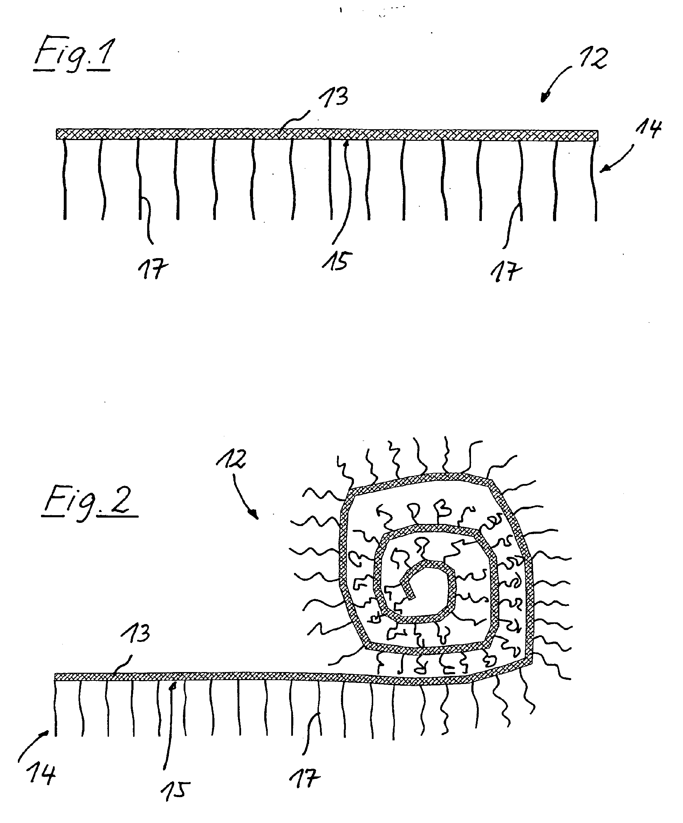

Die Figuren 1 und 2 zeigen einen wichtigen Bestandteil der erfindungsgemäßen Bewässerungseinrichtung 11, nämlich eine flächenförmige Bewässerungsmatte 12. Die Bewässerungsmatte 12 besteht aus einem flächig ausgebildeten Substratträger 13 und einer in Gebrauchslage an dessen Unterseite angeordneten Bewässerungsstruktur 14, die als Baueinheit zusammengefasst sind. Substratträger 13 und Bewässerungsstruktur 14 lassen sich also einheitlich handhaben.

Der Substratträger 13 ist beispielhaft in Form eines aus textilem Material bestehenden Gewebes oder textiler Maschenware dargestellt. Der Substratträger 13 gibt über die Bewässerungsstruktur 14 erhaltenes Wasser an ein darüber liegendes Vegetationssubstrat 16 (Figur 2, 3 oder 4) ab. Vorzugsweise besitzt der Substratträger Wasserspeicherkapazität.

Die Bewässerungsstruktur 14 wird von einer Vielzahl an der Unterseite des Substratträgers 13, über dessen Fläche verteilt angeordneten Fäden 17 gebildet. Die Fäden bestehen aus demselben Textilmaterial wie der Substratträger 13. Die Fäden 17 besitzen Kapillarität, wodurch sich Wasser entgegen der Schwerkraft nach oben in den Substratträger transportieren lässt.

Die Bewässerungsmatte 12 kann in Folge der Flexibilität des Substratträgers 13 und der Biegeschlaffheit der daran angebrachten Fäden 17 in einfacher Weise auf bzw. abgerollt werden, sodass eine einfache und schnelle Verlegung möglich ist. Zur großflächigen Bewässerung beispielsweise von Dachbegrünungen, werden mehrere Bewässerungsmatten 12 nebeneinander angeordnet, wobei jeweils benachbarte Bewässerungsmatten 12 an den Längsrändern überlappend angeordnet sind. An den Längsrändern befinden sich keine Fäden 17, wodurch eine Verbindung benachbarter Bewässerungsmatten 12 über geeignete Verbindungsmittel, beispielsweise einem textilen Haftverschluss möglich ist.

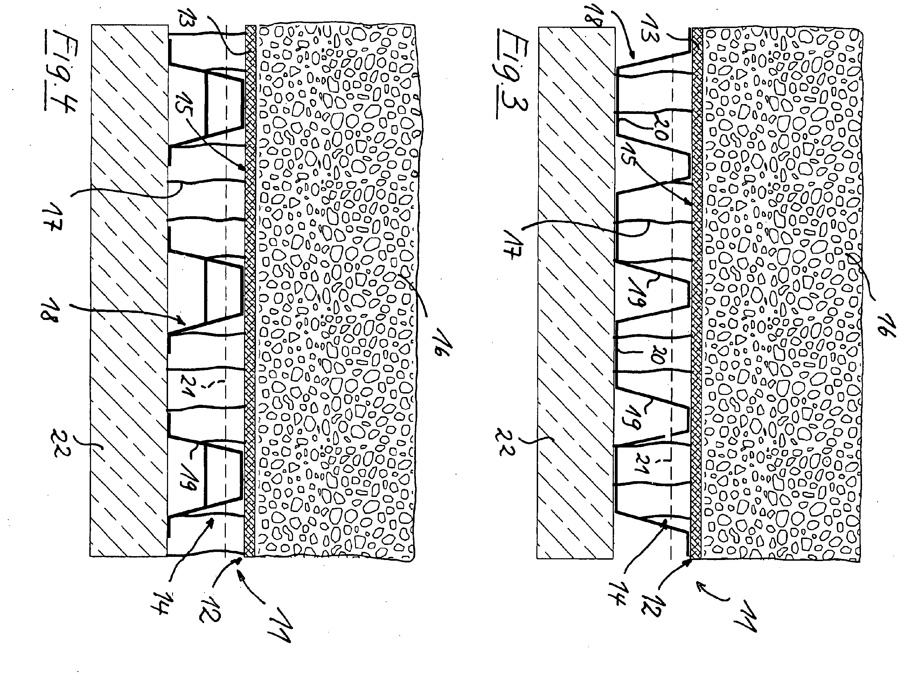

Figur 3 zeigt eine erste Ausführungsform der erfindungsgemä**ß**en Bewässerungseinrichtung 11. Über der Bewässerungsmatte 12 befindet sich, wie bereits vorstehend erwähnt, das Vegetationssubstrat 16. Der textile Substratträger 13 übt dabei eine Filterfunktion aus, derart, dass Vegetationssubstrat 16 daran gehindert wird, die Bewässerungsmatte 12 zu durchdringen. Unterhalb der Bewässerungsmatte 12 befindet sich eine Abstandshaltevorrichtung 18, die gemäß der ersten Ausführungsform der Bewässerungseinrichtung 11 aus einer Vielzahl von rasterförmig angeordneten Abstandselementen 19 bzw. -profilen aufgebaut ist, wobei benachbarte Abstandshalteelemente 19 durch Muldenabschnitte 20 miteinander verbunden sind. Die Abstandshaltevorrichtung 18 sorgt dafür, dass der Substratträger 13 auf Abstand zur Wasseroberfläche liegt, um eine Übernässung des Substratträgers 13 zu verhindern. Wie gemäß Figur 3 gezeigt, tauchen also lediglich die Fäden 17 in das Wasser ein.

Der Wasserstand 21 ist also ein Stück weit unterhalb der Unterseite 15 des Substratträgers 13. Die Abstandshaltevorrichtung 18, die sich durch miteinander verbundene Abstandshalteelemente 19 auszeichnet, könnte auch als flächige Abstandshaltematte bezeichnet werden. Eine solche Abstandshaltematte kann flexibel ausgebildet sein, sodass sie sich ähnlich der Bewässerungsmatte 12 ebenfalls auf- bzw. abrollen lässt, sodass auch hier eine einfache und schnelle Verlegung möglich ist. Als Material für eine solche Abstandshaltematte eignet sich beispielsweise Kunststoff. Die Abstandshaltematte hat darüber hinaus neben der Abstandshaltefunktion weitere Funktionen, nämlich sie dient als Wasserspeicher und zudem als Drainage zur gleichmäßigen Verteilung des Wassers über die Fläche. Wie in Figur 3 dargestellt, kann das Wasser also in den Muldenabschnitten 20 zwischen den Abstandshalteelementen stehen. Dabei können benachbarte Muldenabschnitte durch einen Überlauf (nicht dargestellt) miteinander verbunden sein, sodass die Wasserstände 21 in den jeweiligen Muldenabschnitten 20 im Wesentlichen gleich hoch sind. Die Abstandshaltevorrichtung 18 bzw. gemäß Figur 3 die Abstandshaltematte ist wiederum auf einer Unterlage bzw. Tragschale 22 angeordnet.

Figur 4 zeigt eine zweite Ausführungsform der erfindungsgemäßen Bewässerungseinrichtung 11. Diese unterscheidet sich von der zuvor beschriebenen ersten Ausführungsform dadurch, dass die Abstandshaltevorrichtung 18 aus einer Vielzahl separater Abstandshalteelemente 19 bzw. -profile aufgebaut ist, die also nicht miteinander verbunden sind. Auch hier bewirken die Abstandshalteelemente 19, dass die Unterseite des Substratträgers 13 auf Abstand zur Wasseroberfläche gehalten wird. Der Wasserstand 21 ist also auch hier ein Stück weit von der Unterseite 15 des Substratträgers 13 entfernt. Es tauchen also auch hier lediglich die Fäden 17 ins Wasser ein. Das Wasser ist jedoch nicht wie gemäß der ersten Ausführungsform in Muldenabschnitten bevorratet, sondern steht direkt auf dem wasserundurchlässigen Untergrund 22. Auch hier findet eine Drainage statt, da sich Wasser zwischen den Abstandshalteelementen 19 hindurch flächig verteilen kann.

Zusammenfassend ist festzustellen, dass die Bewässerungsmatte 12 der erfindungsgemäßen Bewässerungseinrichtung 11 sich dadurch auszeichnet, dass Substratträger 13 und die von Fäden 17 gebildete Bewässerungsstruktur 14 als Baueinheit zusammengefasst sind, wodurch eine einheitliche Handhabung möglich ist. Die Bewässerungsmatte 12 kann im Nichtgebrauchszustand zu einer kompakten Größe zusammengerollt werden. Das Verlegen erfolgt in einfacher und schneller Weise durch Ausrollen der Bewässerungsmatten 12. Die Bewässerungsmatte 12 besitzt eine relativ geringe Bauhöhe und zeichnet sich durch ein relativ niedriges Gewicht aus. Die Länge der Fäden, ihre Kapillarität sowie der Abstand zwischen der Unterseite des Substratträgers und der Wasseroberfläche können derart eingestellt werden, dass es nicht zu übermäßiger Versorgung des Substrates kommt. Ferner kann der Einbau der Bewässerungsmatten 12 so erfolgen, dass bei Verwendung einer Abstandshaltevorrichtung 18 gemäß der ersten Ausführungsform diese nicht leertropfen kann, beispielsweise falls die Bewässerungsmatten 12 über die Abstandshaltevorrichtung hinaus überhängend angeordnet sind.

## Patentansprüche

1. Bewässerungseinrichtung zur kapillaren Bewässerung von Vegetationssubstrat (16) mit einem flächenförmigen, an das Vegetationssubstrat (16) Wasser abgebenden Substratträger (13), der über eine kapillare Bewässerungsstruktur (14) mit Wasser versorgbar ist, wobei dass Substratträger (13) und Bewässerungsstruktur (14) als Baueinheit zu einer einheitlich handhabbaren Bewässerungsmatte (12) zusammengefasst sind, **dadurch gekennzeichnet, dass** die Bewässerungsstruktur von einer Vielzahl von über die Fläche des Substratträgers (13) verteilt angeordneten, von diesem abstehenden, flexiblen Kapillarelementen in Form von Fäden gebildet ist.

2. Bewässerungseinrichtung nach Anspruch 1, **dadurch gekennzeichnet, dass** die Bewässerungsmatte (12) bahnartig ausgestaltet ist.

3. Bewässerungseinrichtung nach Anspruch 1 oder 2, **dadurch gekennzeichnet, dass** die Bewässerungsmatte (12) flexibel, insbesondere auf- und abrollbar ausgebildet ist.

4. Bewässerungseinrichtung nach einem der vorhergehenden Ansprüche, **dadurch gekennzeichnet, dass** die Bewässerungsmatte (12) aus witterungsbeständigem Material besteht.

5. Bewässerungseinrichtung nach einem der vorhergehenden Ansprüche, **dadurch gekennzeichnet, dass** die Bewässerungsmatte (12) mit Filterfunktion für darüberliegendes Vegetationssubstrat (16) aufgebaut ist.

6. Bewässerungseinrichtung nach einem der vorhergehenden Ansprüche, **dadurch gekennzeichnet, dass** die Bewässerungsmatte zumindest teilweise aus recyclingfähigem Material besteht.

7. Bewässerungseinrichtung nach einem der vorhergehenden Ansprüche, dass Substratträger (13) und Bewässerungsstruktur (14) aus demselben Material bestehen.

8. Bewässerungseinrichtung nach einem der vorhergehenden Ansprüche, **dadurch gekennzeichnet, dass** der Substratträger (13) zumindest teilweise aus kapillar wirksamem Material besteht.

9. Bewässerungseinrichtung nach einem der vorhergehenden Ansprüche, **dadurch gekennzeichnet, dass** der Substratträger (13) von einem Vlies und/oder einer Folie und/oder einem Gewebe und/oder einer Maschenware und/oder einem Gitter gebildet ist.

10. Bewässerungseinrichtung nach Anspruch 9, **dadurch gekennzeichnet, dass** der Substratträger aus textilem Material besteht.

11. Bewässerungseinrichtung nach einem der vorhergehenden Ansprüche, **dadurch gekennzeichnet, dass** die Bewässerungstruktur (14) Bestandteil des Substratträgers (13) ist.

12. Bewässerungseinrichtung nach einem der vorhergehenden Ansprüche, **dadurch gekennzeichnet, dass** mehrere Bewässerungsmatten (12) mittels Verbindungsmitteln miteinander verbindbar oder verbunden sind.

13. Bewässerungseinrichtung nach Anspruch 13, **dadurch gekennzeichnet, dass** die Verbindungsmittel von textilen Haftverschlüssen gebildet sind.

14. Bewässerungseinrichtung nach einem der vorhergehenden Ansprüche, **gekennzeichnet durch** eine unterhalb der Bewässerungsmatte (12) angeordnete oder anzuordnende Abstandshaltevorrichtung (18) zur Abstandshaltung des Substratträgers (13) von der Wasseroberfläche eines der Bewässerungsstruktur (14) zugeordneten Wasserreservoirs.

15. Bewässerungseinrichtung nach Anspruch 14, **dadurch gekennzeichnet, dass** die Abstandshaltevorrichtung (18) eine Vielzahl von rasterartig angeordneten Abstandshalteelementen (19) aufweist.

16. Bewässerungseinrichtung nach Anspruch 15, **dadurch gekennzeichnet, dass** die Abstandshalteelemente (19) miteinander zusammenhängend ausgebildet sind, wobei benachbarte Abstandshalteelemente (19) durch als Wasserreservoirs dienende Muldenabschnitte (20) verbunden sind.

## Claims

1. Watering device for the capillary watering of vegetation substrate (16) with a flat substrate support (13) delivering water to the vegetation substrate (16) and able to be supplied with water through a capillary watering structure (14), wherein the substrate support (13) and watering structure (14) are combined to form a watering mat (12) which may be handled as one unit, **characterised in that** the watering structure is formed by a multiplicity of flexible capillary elements in the form of threads, distributed over and standing up from the surface of the substrate support (13).

2. Watering device according to claim 1, **characterised in that** the watering mat (12) is in the form of a strip.

3. Watering device according to claim 1 or 2, **characterised in that** the watering mat (12) is flexible, and in particular designed to be rolled up and rolled out.

4. Watering device according to any of the preceding claims, **characterised in that** the watering mat (12) is made of weather-resistant material.

5. Watering device according to any of the preceding claims, **characterised in that** the watering mat (12) is provided with a filtering function for overlying vegetation substrate (16).

6. Watering device according to any of the preceding claims, **characterised in that** the watering mat is made at least partly of recyclable material.

7. Watering device according to any of the preceding claims, **characterised in that** the substrate support (13) and the watering structure (14) are made of the same material.

8. Watering device according to any of the preceding claims, **characterised in that** the substrate support (13) is made at least partly of material with capillary effectiveness.

9. Watering device according to any of the preceding claims, **characterised in that** the substrate support (13) is formed from a geotextile and/or a film and/or a fabric and/or knitware and/or mesh.

10. Watering device according to claim 9, **characterised in that** the substrate support is made of textile material.

11. Watering device according to any of the preceding claims, **characterised in that** the watering structure (14) is an integral part of the substrate support (13).

12. Watering device according to any of the preceding claims, **characterised in that** several watering mats (12) may be or are connected to one another by connecting means.

13. Watering device according to claim 13, **characterised in that** the connecting means are formed by textile touch-and-close fasteners.

14. Watering device according to any of the preceding claims, **characterised by** a spacer device (18) located or to be located beneath the watering mat (12) for separating the substrate support (13) from the water surface of a water reservoir assigned to the watering structure (14).

15. Watering device according to claim 14, **characterised in that** the spacer device (18) has a multiplicity of spacer elements (19) arranged in the form of a grid.

16. Watering device according to claim 15, **characterised in that** the spacer elements (19) are connected to one another, with adjacent spacer elements (19) connected by trough sections (20) serving as the water reservoir.

## Revendications

1. Dispositif d'arrosage destiné à l'arrosage capillaire d'un substrat végétal (16) comportant un support de substrat (13) planiforme délivrant de l'eau au substrat végétal (16), lequel support de substrat peut être alimenté en eau par l'intermédiaire d'une structure d'arrosage (14) capillaire, sachant que le support de substrat (13) et la structure d'arrosage (14) sont assemblés en tant qu'unité modulaire pour former un tapis d'arrosage (12) pouvant être manié de manière homogène, **caractérisé en ce que** la structure d'arrosage est formée par une pluralité d'éléments capillaires flexibles sous forme de fils, lesquels sont disposés de manière répartie sur la surface du support de substrat (13) tout en faisant saillie de ce dernier.

2. Dispositif d'arrosage selon la revendication 1, **caractérisé en ce que** le tapis d'arrosage (12) est configuré sous la forme d'une bande.

3. Dispositif d'arrosage selon la revendication 1 ou 2, **caractérisé en ce que** le tapis d'arrosage (12) est réalisé de manière flexible, en particulier de manière à pouvoir être enroulé et déroulé.

4. Dispositif d'arrosage selon l'une quelconque des revendications précédentes, **caractérisé en ce que** le tapis d'arrosage (12) se compose d'un matériau résistant aux intempéries.

5. Dispositif d'arrosage selon l'une quelconque des revendications précédentes, **caractérisé en ce que** le tapis d'arrosage (12) est construit avec une fonction de filtrage pour le substrat végétal (16) situé dessus.

6. Dispositif d'arrosage selon l'une quelconque des revendications précédentes, **caractérisé en ce que** le tapis d'arrosage se compose au moins en partie d'un matériau recyclable.

7. Dispositif d'arrosage selon l'une quelconque des revendications précédentes, **caractérisé en ce que** le support de substrat (13) et la structure d'arrosage (14) se composent du même matériau.

8. Dispositif d'arrosage selon l'une quelconque des revendications précédentes, **caractérisé en ce que** le support de substrat (13) se compose au moins en partie d'un matériau efficace d'un point de vue capillaire.

9. Dispositif d'arrosage selon l'une quelconque des revendications précédentes, **caractérisé en ce que** le support de substrat (13) est formé par un non-tissé et/ou un film et/ou un tissu et/ou des tissus maillés au mètre et/ou un grillage.

10. Dispositif d'arrosage selon la revendication 9, **caractérisé en ce que** le support de substrat se compose d'un matériau textile.

11. Dispositif d'arrosage selon l'une quelconque des revendications précédentes, **caractérisé en ce que** la structure d'arrosage (14) est un composant du support de substrat (13).

12. Dispositif d'arrosage selon l'une quelconque des revendications précédentes, **caractérisé en ce que** plusieurs tapis d'arrosage (12) peuvent être assemblés ou sont assemblés au moyen de moyens d'assemblage.

13. Dispositif d'arrosage selon la revendication 12, **caractérisé en ce que** les moyens d'assemblage sont formés par des pièces de fermeture adhésives textiles.

14. Dispositif d'arrosage selon l'une quelconque des revendications précédentes, **caractérisé par** un système d'écartement (18) disposé ou à disposer sous le tapis d'arrosage (12) servant à maintenir le support de substrat (13) à distance de la surface de l'eau d'un réservoir d'eau associé à la structure d'arrosage (14).

15. Dispositif d'arrosage selon la revendication 14, **caractérisé en ce que** le système d'écartement (18) présente une pluralité d'éléments d'écartement (19) disposés à la manière d'une trame.

16. Dispositif d'arrosage selon la revendication 15, **caractérisé en ce que** les éléments d'écartement (19) sont réalisés de manière à dépendre les uns des autres, des éléments d'écartements (19) adjacents étant assemblés par des sections formant des auges (20) servant de réservoirs d'eau.
